(19) Europäisches Patentamt
European Patent Office
Office européen des brevets

(11) **EP 3 009 790 A1**

(12) **EUROPEAN PATENT APPLICATION**

(43) Date of publication:
20.04.2016  Bulletin 2016/16

(51) Int Cl.:
*G01B 21/04* (2006.01)     *G01B 11/24* (2006.01)

(21) Application number: 15189675.0

(22) Date of filing: 14.10.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 15.10.2014  JP 2014210854

(71) Applicant: **Canon Kabushiki Kaisha**
**Tokyo 146-8501 (JP)**

(72) Inventor: **FURUKAWA, Yasunori**
**Tokyo Tokyo 146-8501 (JP)**

(74) Representative: **TBK**
**Bavariaring 4-6**
**80336 München (DE)**

(54) **SLOPE DATA PROCESSING METHOD, SLOPE DATA PROCESSING APPARATUS AND MEASUREMENT APPARATUS**

(57)  The method acquires slope data by measurement of slopes of an analysis object at multiple measurement points. The method calculates, by using the slope data at mutually adjacent measurement points, differences $D_x$ and $D_y$ of the analysis object between at the mutually adjacent measurement points (S101), sets multiple start positions at each of which a calculation of the data of the analysis object is started (S102), adds together the differences $D_x$ and $D_y$ on a path from one of the start positions to a position at which the data is acquired (S103), repeats the above additions (S104), calculates x and y average addition results of the differences $D_x$ and $D_y$ from all the start positions (S105), and produces the data by subtracting, from the x and y average addition results, a piston that is an average of the x and y average addition results (S106).

START

CALCULATE DIFFERENCES Dx AND Dy OF WAVEFRONT BETWEEN AT TWO MUTUALLY ADJACENT GRID POINTS — S101

SET DISTRIBUTION OF START POSITIONS AT EACH OF WHICH WAVEFRONT IS CALCULATED — S102

ADD TOGETHER DIFFERENCES Dx AND Dy OF WAVEFRONT ON PATH FROM START POSITION TO WAVEFRONT CALCULATION POSITION — S103

REPEAT STEP S103 SAME NUMBER AS THAT OF START POSITIONS — S104

CALCULATE X AND Y AVERAGE INTEGRATION VALUES OF INTEGRATION VALUES ACQUIRED AT STEPS S103 AND S104 — S105

SUBTRACT PISTON THAT IS AVERAGE OF AVERAGE INTEGRATION VALUES — S106

END

**FIG. 2**

EP 3 009 790 A1

FIG. 4B

**Description**

BACKGROUND OF THE INVENTION

Field of the Invention

The present invention relates to a technique of calculating, from slope data acquired by measurement of a wavefront of light or a shape of an object, the wavefront or the shape.

Description of the Related Art

There have been demands, in order to more precisely process an optical surface of an optical element such as a lens, for measuring a high-frequency component of a shape of the optical surface and a high-frequency component of a wavefront of light transmitted through the optical element. For the measurement of the shape and the wavefront, a Shack-Hartmann sensor or a shearing interferometer is used. Data acquired by measuring the shape and the wavefront with the Shack-Hartmann sensor or the shearing interferometer is data showing slopes in an x direction and in a y direction at grid points (measurement points) of an xy orthogonal coordinate system (the data is hereinafter referred to as "x/y slope data"). In order to acquire the shape and the wavefront from the x/y slope data, it is necessary to perform a two-dimensional integration calculation on the x/y slope data. As methods therefor, W.H.Southwell, "Wave-front estimation from wave-front slope measurement", J.Opt.Soc.Am.70, p.998-1006, 1980 discloses a modal method and a zonal method.

The modal method is a method of acquiring, by performing fitting to the x/y slope data that is measurement data with use of derivatives of x and y of multiple basis functions (e.g., Zernike functions), coefficients of the derivatives and multiplying the coefficients by the basis functions to perform the integration calculation. The modal method performs the integration calculation so as to minimize a difference between the measurement data and a linear sum of the multiple derivatives and thus generates a small degree of integration error due to an error such as a noise contained in the measurement data. On the other hand, the zonal method is a method of performing the integration calculation by two-dimensional sequential addition of the x/y slope data for each of certain data areas, which can provide high-frequency components of the shape and wavefront. The zonal method includes an iterative method disclosed in W.H.Southwell, "Wave-front estimation from wave-front slope measurement", J.Opt.Soc.Am.70, 1980, p.998-1006 and a path integration method disclosed in Japanese Patent Laid-Open No. 2007-33263 and Daniel Malacara, "Optical Experiment and Measurement Method I, Optical Shop Testing", p.356.

However, the modal method can provide, as the wavefront, only a component expressed by the basis function and thus requires, for acquisition of the high-frequency components of the shape and wavefront, creating derivatives of the basis functions that express the high-frequency component and fitting to the x/y slope data with use of the derivatives. This requirement undesirably increases a required storage amount and a calculation time.

Moreover, the path integration method in the zonal method has a problem that it is prone to generating a large integration error due to accumulation of errors contained in the measurement data. Furthermore, the iterative method in the zonal method has a problem that a convergence requires a long period of time.

SUMMARY OF THE INVENTION

The present invention provides a slope data processing method and a slope data processing apparatus each capable of calculating even a high-frequency component of a wavefront and that of a shape at high speed while reducing an integration error due to an error contained in two-dimensional slope data.

The present invention in its first aspect provides a slope data processing method as specified in claims 1 to 8.

The present invention in its second aspect provides a slope data processing apparatus as specified in claim 9.

The present invention in its third aspect provides a measurement apparatus as specified in claim 10.

The present invention in its fourth aspect provides a shaping apparatus as specified in claim 11.

The present invention in its fifth aspect provides an optical apparatus as specified in claim 12.

The present invention in its sixth aspect provides a manufacturing method as specified in claim 13.

The present invention in its seventh aspect provides a computer program as specified in claim 14.

Further features and aspects of the present invention will become apparent from the following description of exemplary embodiments with reference to the attached drawings.

BRIEF DESCRIPTION OF THE DRAWINGS

FIG. 1 illustrates an effective area having slope data and an ineffective area in Embodiment 1 of the present invention.

FIG. 2 is a flowchart illustrating a procedure of a wavefront analysis method of Embodiment 1.

FIG. 3 is a flowchart illustrating a procedure for locally acquiring differences $D_x$ and Dy of a wavefront of light in the wavefront analysis method of Embodiment 1.

FIGS. 4A and 4B illustrate distributions of integration start positions in Embodiment 1.

FIG. 5 illustrates integration paths from the integration start position to a position at which the wavefront is calculated in Embodiment 1.

FIG. 6 illustrates all shortest paths from the integration start position to the position at which the wavefront is calculated in Embodiment 1.

FIG. 7 is a flowchart illustrating a method of integrating the differences $D_x$ and Dy of the wavefront present on all the shortest paths from the integration start position to the position at which the wavefront is calculated in Embodiment 1.

FIG. 8 illustrates a configuration of a wavefront analysis apparatus that is Embodiment 2 of the present invention.

FIG. 9 illustrates a configuration of a shape analysis apparatus that is Embodiment 3 of the present invention.

FIG. 10 illustrates a configuration of a lens shaping apparatus that is Embodiment 4 of the present invention.

DESCRIPTION OF THE EMBODIMENTS

Exemplary embodiments of the present invention will be described below with reference to the attached drawings.

[Embodiment 1]

A slope data processing method of a first embodiment (Embodiment 1) of the present invention provides slope data acquired by measuring a slope of a wavefront of light (analysis object) transmitted through a lens (optical element) that is a measurement object at each of multiple measurement points mutually separate in an x direction and in a y direction. This method produces data of the wavefront by using the slope data. The light from the measurement object may be light reflected by a surface of the measurement object.

First of all, description will be made of definitions of terms in this embodiment. The slope data described in this embodiment shows slopes in the x direction and in the y direction measured by a measurement apparatus at the measurement points corresponding to grid points (the measurement points are hereinafter referred to as "grid points") in an xy orthogonal coordinate system (two-dimensional grid). The slope data in the x direction at the grid points is hereinafter referred to as "x slope data", and the slope data in the y direction at the grid points is hereinafter referred to as "y slope data". The x slope data and the y slope data are collectively referred to as "x/y slope data". The x slope data and the y slope data are respectively represented by $S_x(i,j)$ and Sy(i,j). The grid point at which the x slope data is measured and that at which the y slope data is measured are respectively represented by x(i,j) and y(i,j). In the data, i represents an integer from 1 to $N_1$, j represents an integer from 1 to $N_2$, and i and j each represent an order of the slope data. The integer $N_1$ indicates number of the slope data in the x direction, and the integer $N_2$ indicates number of the slope data in the y direction.

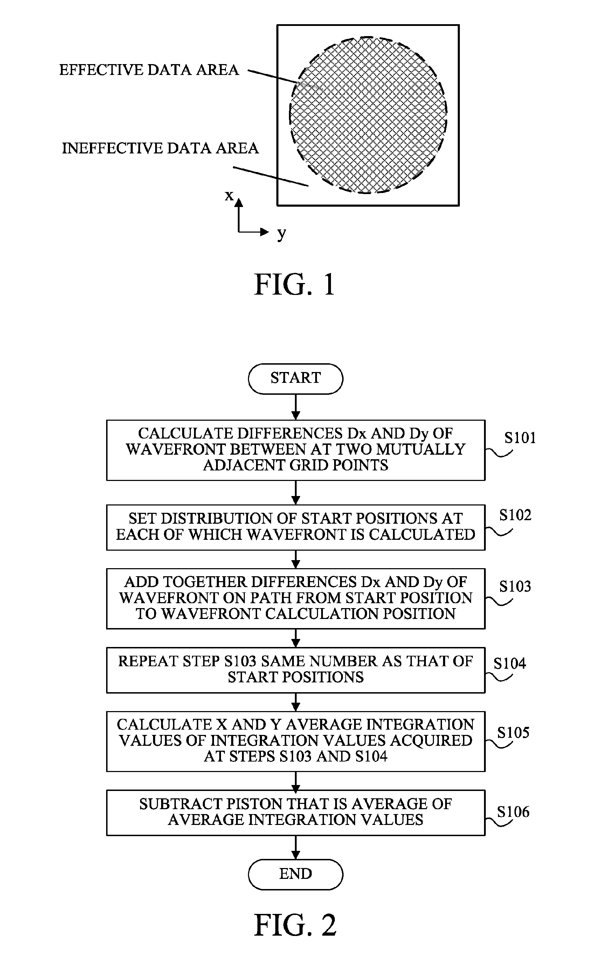

FIG. 1 illustrates a data placement surface showing effective slope data acquired by measuring, with the measurement apparatus, a wavefront of light transmitted through or reflected by a lens whose outer shape is a circular shape. The above-described xy orthogonal coordinate system is set on the data placement surface.

An area of the data placement surface surrounded by a circular dotted line is an effective data area where the effective slope data is stored for each of the grid points present in this area. On the other hand, an area outside of the effective data area is an ineffective data area where the grid points are present at which the slope (that is, the light) is not detected and thus in which the effective slope data is not stored.

A flowchart of FIG. 2 illustrates a procedure of a wavefront analysis method as the slope data processing method of this embodiment. An actual process using the wavefront analysis method is executed according to a slope data processing program as a computer program by a wavefront analysis apparatus as a slope data processing apparatus constituted by a computer, such as a personal computer or a microcomputer. In the following description, the process is performed by the computer. The computer serves as a difference calculator, a start position setter, a difference adder, a repeater and a data producer.

At step S101 (as a first step), the computer calculates, by using the slope data at two or more (two in this embodiment) mutually adjacent grid points in the effective data area illustrated in FIG. 1, $D_x$ and $D_y$ that are differences of the wavefronts between at the mutually adjacent grid points (that is, between at mutually adjacent measurement points of the multiple measurement points). For instance, the computer calculates $D_x(i,j)$ by using x slope data $S_x(i,j)$ and $S_x(i+1,j)$ at two grid points x(i,j) and x(i+1,j), according to expression (1):

$$D_x(i,j) = \frac{1}{2}\left(S_x(i+1,j) + S_x(i,j)\right)\left(x(i+1,j) - x(i,j)\right). \quad (1)$$

Alternatively, the computer may calculate the differences $D_x$ and Dy between at the wavefronts by using the slope data at three mutually adjacent grid points. For instance, the computer calculates, by using x slope data $S_x(i,j)$, $S_x(i+1,j)$ and $S_x(i+2,j)$ at three grid points $x(i,j)$, $x(i+1,j)$ and $x(i+2,j)$, coefficients a, b and c of a quadratic function f of x expressed by expression (2):

$$f = ax^2 + bx + c. \quad (2)$$

Expression (2) can be expressed as a matrix by expression (3):

$$\begin{bmatrix} S_x(i,j) \\ S_x(i+1,j) \\ S_x(i+2,j) \end{bmatrix} = f = \begin{bmatrix} x(i,j)^2 & x(i,j) & 1 \\ x(i+1,j)^2 & x(i+1,j) & 1 \\ x(i+2,j)^2 & x(i+2,j) & 1 \end{bmatrix} \begin{bmatrix} a \\ b \\ c \end{bmatrix}. \quad (3)$$

Next, a value of integration (hereinafter referred to as "an integration value") F of the quadratic function f is calculated by using expression (4):

$$F(k) = \frac{1}{3}ax(i+k-1,j)^3 + \frac{1}{2}bx(i+k-1,j)^2 + cx(i+k-1,j). \quad (4)$$

In expression (4), k represents an integer that is 1, 2 or 3. A constant term of F is unnecessary because values at the mutually adjacent grid points are subtracted from one another later. The difference $D_x$ can be calculated from the integration value F by using expression (5):

$$\begin{aligned} D_x(i,j) &= F(2) - F(1) \\ D_x(i+1,j) &= F(3) - F(2) \end{aligned} \quad (5)$$

An average value between $D_x(i+1,j)$ and $D_x(i+1,j)$ that is acquired by the above-described calculation using $S_x(i+1,j)$, $S_x(i+2,j)$ and $S_x(i+3,j)$ at $x(i+1,j)$, $x(i+2,j)$ and $x(i+3,j)$ may be defined as a final $D_x(i+1,j)$.

Expression (1) expresses a trapezoidal integration. Therefore, when the measured wavefront contains a component having a relatively high frequency whose number of data per period is 50 or more, the difference $D_x$ as a result of expression (1) contains a large integration error. Instead, calculating the difference $D_x$ by using expressions (2) to (5) results in a smaller integration error than that in expression (1), which is desirable.

When the measured wavefront contains a component having a frequency higher than that described above (whose number of data per period is 7 or more), acquisition of the difference $D_x$ by calculation of expressions (2) to (5) using three data also results in a large integration error. For this reason, it is desirable to perform fitting for acquiring coefficients for x, $x^2$,..., $x^{N-1}$ in a polynomial expressing a (N-1)-th order function of x by using the slope data of N mutually adjacent grid points whose number N is four or more, to calculate an integration value of the polynomial and then to acquire the difference $D_x$ by calculating differences of the integration value between at the N grid points.

Alternatively, the difference $D_x$ may be acquired by the following method. The method first acquires a first difference $D_{x1}$ corresponding to the difference $D_x$ by calculation of expressions (2) to (5) using the slope data at N mutually adjacent grid points whose number N is three or more (a (N-1)-th order polynomial in this calculation is herein referred to as "a first polynomial"). Subsequently, this method calculates coefficients for x, $x^2$,..., $x^N$ of a second polynomial expressing an N-th order function of x by using the slope data at (N+1) mutually adjacent grid points, calculates the integration value of the second polynomial and then calculates a second difference $D_{x2}$ corresponding to the difference $D_x$ from a difference of the integration value between at the (N+1) grid points. Finally, this method regards an average

of $D_{x1}$ and $D_{x2}$ as the difference $D_x$.

The above-described polynomial is not limited to a polynomial of x and may be any integrable function such as a cosine function of x or an exponential function of x. In particular, a function that can express a value as close to a measured wavefront as possible is desirable.

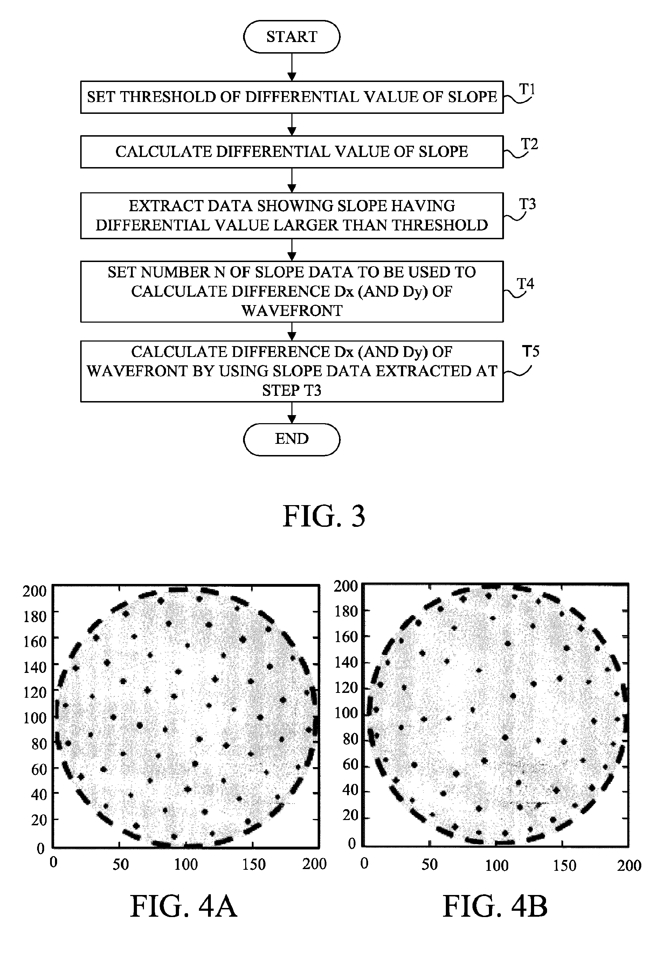

When the high-frequency component of the wavefront is locally measured, the difference $D_x$ may be calculated by locally selecting data thereof and by using a polynomial of x corresponding to the high-frequency component. With reference to a flowchart of FIG. 3, description will hereinafter be made of a method of calculating such a difference $D_x$.

At step T1, the computer sets a threshold of a differential value of the slope to specify a position of the high-frequency component of the wavefront.

At step T2, the computer calculates a difference of the slopes between at the mutually adjacent grid points to acquire the differential value (change amount) of the slope.

At step T3, the computer extracts the slope data showing the slope having a differential value larger than the threshold set at step T1.

At step T4, the computer sets number N of the slope data to be used to calculate the difference $D_x$. It is desirable that the number N be a value proportional to the differential value of the slope extracted at step T3.

At step T5, the computer calculates coefficients for x, $x^2$,..., $x^{N-1}$ in the polynomial expressing the (N-1)-th order function of x by using N slope data whose number N was set at step T4 among the slope data extracted at step T3. Thereafter, the computer calculates an integration value of the polynomial and calculates the difference $D_x$ from a difference of the integration value between at the mutually adjacent grid points.

The above-described calculation method enables acquiring the difference $D_x$ of the wavefront with a small error even when the high-frequency component of the wavefront is locally measured.

Although the above description was made of the calculation of the difference $D_x$, reading x as y, $S_x$ as $S_y$, $D_x$ as $D_y$, $D_{x1}$ and $D_{x2}$ as $D_{y1}$ and $D_{y2}$ enables calculating the difference Dy in the same manner as that used to calculate the difference $D_x$. In the above-described manner, the computer acquires the differences $D_x$ and Dy for all the grid points in the effective data area.

In the following description, the differences $D_x$ and Dy calculated between at the mutually adjacent two grid points and the differences $D_x$ and Dy calculated between at one grid point of the two grid points and another grid point adjacent to the one grid point are referred to as "mutually adjacent differences $D_x$ and $D_y$".

Subsequently, at step S102 (as a second step), the computer sets multiple start positions at each of which the data of the wavefront is calculated. Since the computer performs path integration in this embodiment as described later, it is necessary to set, as the start positions, the grid points at which the effective slope data is stored. Unevenness in a distribution of the multiple start positions decreases an effect of averaging measurement errors, leading to an increase in the integration error. For this reason, it is desirable to set the multiple start positions such that their arrangement density is uniform as illustrated in FIG. 4A. When the arrangement density of the start positions is uniform, directions of integration paths are not distributed near a boundary between the effective data area and the ineffective data area. This decreases the effect of averaging the measurement errors, leading to an increase in the integration error. In order to distribute the directions of the integration paths, it is more desirable to set the multiple start positions such that, in the effective data area, the arrangement density is higher on a side closer to the boundary than on a side farther from the boundary as illustrated in FIG. 4B.

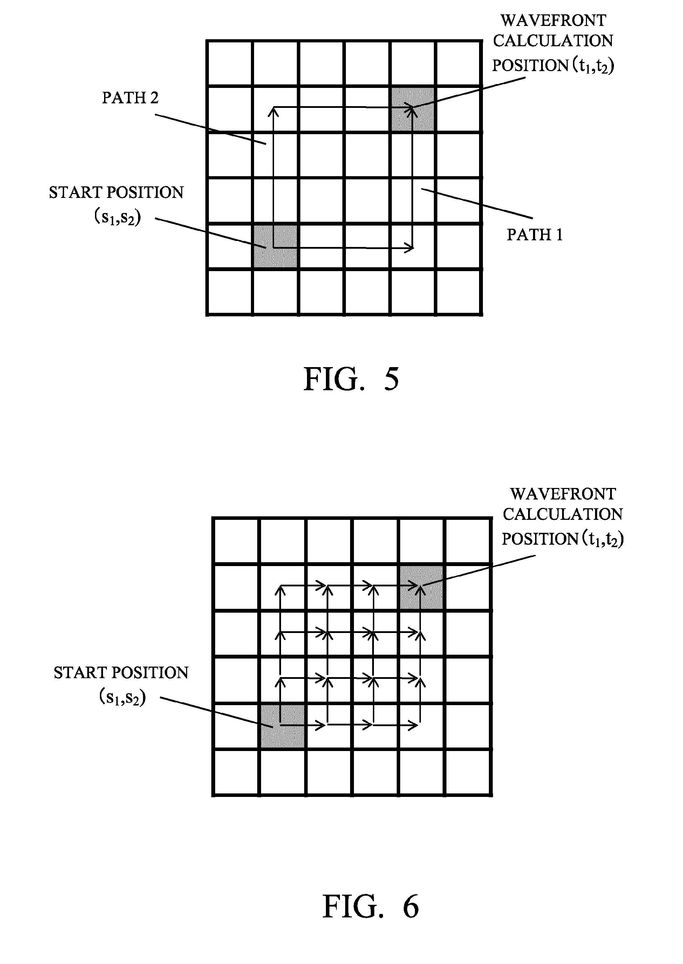

Next, at step S103 (as a third step), the computer sequentially adds together the differences $D_x$ and Dy present on a path from one start position $(s_1, s_2)$ to a position $(t_1,t_2)$ at which the data of the wavefront is calculated (the position is hereinafter referred to as "a wavefront calculation position") as illustrated in FIG. 5 . Each of $s_1$ and $t_1$ is an integer equal to or more than 1 and equal to or less than $N_1$, and each of $s_2$ and $t_2$ is an integer equal to or more than 1 and equal to or less than $N_2$ where $s_1<t_1$ and $s_2<t_2$. For instance, the addition (integration) on a path 1 illustrated in FIG. 5 can be calculated by using expression (6):

$$W(t_1,t_2) = \sum\nolimits_{i=s_1}^{t_1-1} D_x(i,s_2) + \sum\nolimits_{j=s_2}^{t_2-1} D_y(t_1,j). \quad (6)$$

The addition (integration) on a path 2 in FIG. 5 can be calculated by using expression (7):

$$W(t_1,t_2) = \sum\nolimits_{i=s_1}^{t_1-1} D_x(i,t_2) + \sum\nolimits_{j=s_2}^{t_2-1} D_y(s_1,j). \quad (7)$$

Since addition values (integration values) acquired by using expressions (6) and (7) should be equal to each other, an average value of these addition values may be defined as a result of the addition.

Furthermore, as illustrated in FIG. 6, the differences $D_x$ and Dy may be added together for all shortest paths from the start position $(s_1, s_2)$ to the wavefront calculation position $(t_1, t_2)$, and an average value of resulting addition values may be defined as a result of the addition. This method performs the integration by using a large number of data and thus provides a large averaging effect, which enables reducing the integration error due to the measurement errors. A total number g of the shortest paths is expressed by expression (8):

$$g(t_1, t_2) = |t_1 - s_1| + |t_2 - s_2| \quad C|t_1 - s_1| = \frac{(|t_1 - s_1| + |t_2 - s_2|)!}{(|t_1 - s_1|)!(|t_2 - s_2|)!} . \quad (8)$$

In the following description, two integration values acquired at preceding and following (subsequent) addition positions (that is, at mutually adjacent addition positions) in the sequential addition of the differences $D_x$ and $D_y$ are referred to as "mutually adjacent integration values".

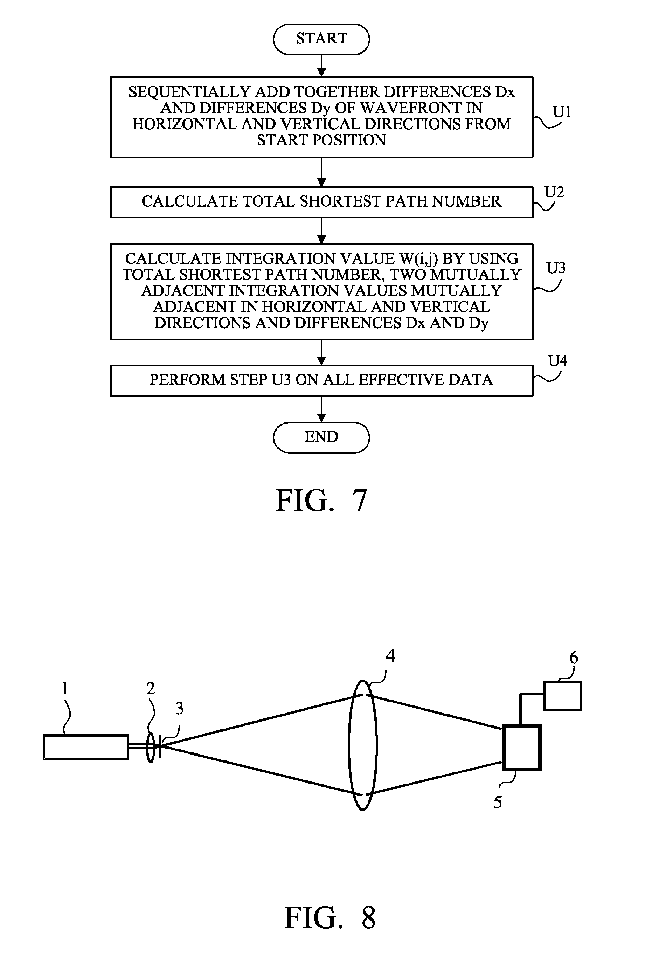

The total number g of the shortest paths exponentially increases with an increase in number of the effective slope data. This exponential increase in the number g consequentially requires a vast calculation time, which is undesirable. For this reason, description will be made of a method using the two mutually adjacent integration values, with reference to a flowchart illustrated in FIG. 7.

At step U1, the computer sequentially calculates, from the start position $(s_1, s_2)$ in the x and y directions, the integration values (sequential addition data) W according to expression (9) by using the differences $D_x$ and Dy. In this calculation, $W(s_1, s_2) = 0$.

```
+x direction
```
$$W(s_1 + i, s_2) = W(s_1 + i - 1, s_2) + D_x(s_1 + i - 1, s_2)$$
```
-x direction
```
$$W(s_1 - i, s_2) = W(s_1 - i + 1, s_2) - D_x(s_1 - i, s_2)$$
```
+y direction
```
$$W(s_1, s_2 + j) = W(s_1, s_2 + j - 1) + D_y(s_1, s_2 + j - 1)$$
```
-y direction
```
$$W(s_1, s_2 - j) = W(s_1, s_2 - j + 1) - D_y(s_1, s_2 - j)$$

$$(9)$$

In expression (9), each of i and j represents an integer equal to or more than 1.

At step U2, the computer calculates the total number of the shortest paths (hereinafter referred to as "total shortest path number") g according to expression (8).

At step U3, the computer performs a calculation of expression (10) by using the total shortest path number g, the mutually adjacent integration values W mutually adjacent in the x and y directions that are calculated at step U1, the differences $D_x$ and Dy to be added to these integration values W at the following addition position. The computer thereby calculates an integration value W(i,j) at a position (i,j). That is, the computer divides a result of the addition of the differences $D_x$ and Dy present on all the shortest paths from the start position to the wavefront calculation position by the total shortest path number g.

+x+y direction

$$W(i,j)=\frac{g(i-1,j)\times\left(W(i-1,j)+D_x(i-1,j)\right)+g(i,j-1)\times\left(W(i,j-1)+Dy(i,j-1)\right)}{g(i-1,j)+g(i,j-1)}$$

+x-y direction

$$W(i,j)=\frac{g(i-1,j)\times\left(W(i-1,j)+D_x(i-1,j)\right)+g(i,j+1)\times\left(W(i,j+1)-Dy(i,j)\right)}{g(i-1,j)+g(i,j+1)}$$

-x+y direction

$$W(i,j)=\frac{g(i+1,j)\times\left(W(i+1,j)-D_x(i,j)\right)+g(i,j-1)\times\left(W(i,j-1)+Dy(i,j-1)\right)}{g(i+1,j)+g(i,j-1)}$$

-x-y direction

$$W(i,j)=\frac{g(i+1,j)\times\left(W(i+1,j)-D_x(i,j)\right)+g(i,j+1)\times\left(W(i,j+1)-Dy(i,j)\right)}{g(i+1,j)+g(i,j+1)}$$

$$(10)$$

In expression (10), each of i and j represents an integer equal to or more than 1.

Alternatively, the computer may add the differences $D_x$ and Dy to the sequential addition data at the addition positions mutually adjacent to the wavefront calculation position in the x and y directions, weight two data acquired by the addition by the total shortest path number and add together the two weighed data.

At step U4, the computer performs the calculation described at step U3 on all the grid points each having the effective slope data.

The above-described calculation enables providing the data of the integration values (addition result) W acquired by adding together the differences $D_x$ and $D_y$ for all the shortest paths from the start position $(s_1,s_2)$ to the wavefront calculation position $(t_1,t_2)$.

At step S104 (as a fourth step), the computer repeats the calculation described at step S103, with each of start positions other than the above-described start position. Performing the path integration while sequentially changing the start positions subsequently changes the integration paths and thus averages the integration error due to the error contained in the measurement data. This averaging of the integration error enables reducing the integration error.

At step S105 (as a fifth step), the computer calculates averages in the x and y directions of the integration values W calculated from all the start positions at steps S103 and S104 to acquire average integration values in the x and y directions (as an x average addition result and a y average addition result).

Thereafter, at step S106 (as a sixth step), the computer averages the average integration values in the x and y directions acquired at step S105 to acquire a piston that is a result of the averaging. Finally, the computer subtracts the piston from each of the average integration values in the x and y directions acquired at step S104. This subtraction enables acquiring data of a two-dimensional wavefront that is the analysis object.

The above-described wavefront analysis method enables calculating highly accurate wavefront data containing less integration error at high speed.

Additional description will be made of the piston mentioned above. Performing the integration of the differences $D_x$ and $D_y$ while sequentially changing the integration start positions enables acquiring an integrated data Wj(x,y). In the data Wj(x,y), j represents an integer from 1 to N, and N represents number of the integrations. When Wj represents an integration value containing an error (noise), and Wt represents an integration value to be acquired, the data Wj(x,y) is expressed as:

$$Wj(x,y)=Aj+Wt(x,y)+Wj(x,y).$$

In this expression, Aj represents the piston that is a constant value independent on x and y.

In this embodiment, the computer calculates the average value (average integration value) Wja(x,y) of the integration values Wj at the above-described fifth step by using the following expression:

$$Wja(x,y)=\Sigma_j Wj(x,y)/N$$

This calculation decreases the error.

Then, at the sixth step, the computer acquires ∑Aj/N as the piston. Specifically, when Wp represents the piston that is an average value of Wja(x,y) averaged in the x and y directions, the computer acquires this value by using the following expression:

$$Wp=\Sigma_x\Sigma_y Wja(x,y)/n$$

In this expression, n represents number of (x,y) data.

Finally, the computer subtracts the piston Wp from the average integration value Wja(x,y) acquired at the fifth step as expressed by the following expression:

$$Wt(x,y)=Wja(x,y)-Wp,$$

which enables acquiring the integration value Wt to be acquired. The reason for subtracting the piston Wp is because a term representing the piston, which is a constant value with respect to two-dimensional x-y data, does not have any meaning in the integration.

[Embodiment 2]

FIG. 8 illustrates a configuration of a wavefront measurement apparatus that is a second embodiment (Embodiment 2) of the present invention. This wavefront measurement apparatus includes a light source 1, a condenser lens 2, a pinhole plate 3, a sensor 5 and the wavefront analysis apparatus 6 described in Embodiment 1. Between the pinhole plate 3 and the sensor 5, a measurement object lens 4 that is a measurement object is disposed.

An illumination light from the light source 1 is condensed by the condenser lens 2 toward a pinhole of the pinhole plate 3. A spherical wavefront exiting from the pinhole is projected by the measurement object lens 4. A measurement object light transmitted through the measurement object lens 4 is received by the sensor 5. The light source 1 is constituted by a single-color laser, a laser diode or a light emitting diode (LED). The pinhole plate 3 may be replaced by a single-mode fiber capable of producing a spherical wavefront having less aberration.

The sensor 5 as a slope acquirer is constituted by a microlens array in which a large number of microlenses are arranged in a matrix-like array and a light receiving element such as a CCD sensor. This type of sensor is commonly called a Shack-Hartmann sensor. The light transmitted through the microlens array is condensed by each of the microlenses on a light receiving element. A slope S of the light entering the sensor 5 can be acquired by detecting a difference ∆p between a position of a spot formed by the light condensed by the microlens and a pre-calibrated position (for example, a position of the spot formed when a collimated light enters the sensor 5). When L represents a distance between the microlens array and the light receiving element, the difference ∆p and the slope S have a relation of:

$$S=\Delta p/L.$$

Acquiring the slope S for all the microlenses enables measuring a distribution of slopes of the light received by the sensor 5. In this embodiment, x and y in Embodiment 1 correspond to the position of the microlens, and $S_x$ and Sy in Embodiment 1 correspond to slope data in the x and y directions acquired for each of the microlenses. In addition, $N_1$ and $N_2$ in Embodiment 1 correspond to number of the microlenses in the x direction and that in the y direction, respectively.

The sensor 5 is not limited to the Shack-Hartmann sensor. Alternatively, a sensor using a Hartmann method, or a shearing interferometer or a Talbot interferometer each being constituted by a diffraction grating and a light receiving element such as a CCD sensor may be used as long as the sensor or the interferometer is capable of measuring a differential wavefront or a slope distribution.

When a diameter of the light received by the sensor 5 is larger than a size of the sensor 5, it is only necessary to measure the distribution of the slopes of the light by moving the sensor 5 in its light receiving plane and to combine data sets of the distribution of the slopes acquired thereby. This applies also to Embodiment 3 described later.

The wavefront analysis apparatus 6 calculates a wavefront of the light transmitted through the measurement object lens 4, by using the slope data acquired by the measurement using the sensor 5. The calculated wavefront enables acquiring an aberration of the measurement object lens 4.

[Embodiment 3]

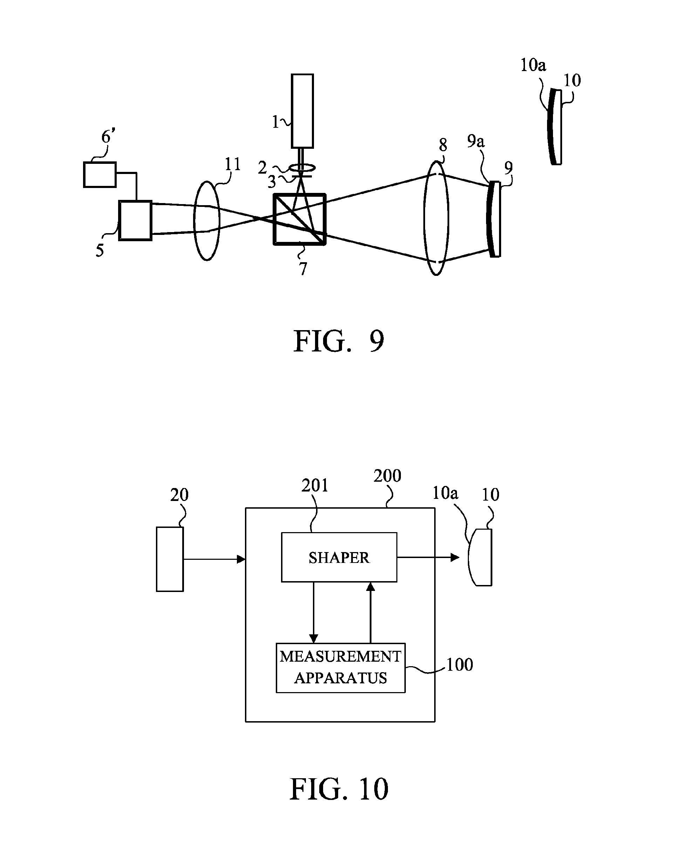

FIG. 9 illustrates a configuration of a shape measurement apparatus that is a third embodiment (Embodiment 3) of the present invention. The shape measurement apparatus is constituted by a light source 1, a condenser lens 2, a pinhole plate 3, a half mirror 7, a projection lens 8, an imaging lens 11, a sensor 5 and a shape analysis apparatus (slope data processing apparatus) 6' that performs the same process as that performed by the wavefront analysis apparatus described in Embodiment 1. On a side opposite to a side on which the half mirror 7 with respect to the projection lens 8, a reference lens 9 is disposed. A projection-lens-side surface 9a of the reference lens 9 is a reference surface. Instead of the reference lens 9, a measurement object lens 10 as a measurement object is disposed. A projection-lens-side surface 10a of the measurement object lens 10 is a measurement object surface.

Light from the light source 1 is condensed by the condenser lens 2 toward a pinhole of the pinhole plate 3. A spherical wavefront exiting from the pinhole is reflected by the half mirror 7 and then is converted by the projection lens 8 into a convergent light. The convergent light is reflected by the reference surface 9a or the measurement object surface 10a, is transmitted through the projection lens 8, the half mirror 7 and the imaging lens 11 and then enters the sensor (Shack-Hartmann sensor) 5.

This embodiment measures the reference surface 9a of the reference lens 9 whose surface shape is known for calibration of an optical system including the projection lens 8, the imaging lens 11 and others. This embodiment acquires, from a difference between a measurement result of the reference surface 9a and a measurement result of the measurement object surface 10a of the measurement object lens 10, a shape of the measurement object surface 10a.

The shape analysis apparatus 6' performs, as described above, the same process as that performed by the wavefront analysis apparatus described in Embodiment 1. However, the shape analysis apparatus 6' first converts, as shown below, x and y corresponding to the position of each microlens on the sensor 5 into X and Y and converts slope data $Sa_x$ and Say of the measurement object surface 10a and slope data $Sb_x$ and Sby of the reference surface 9a both acquired for each microlens into $Sa_x'$, $Sa_y'$ $Sb_x'$ and $Sb_y'$. The conversion is performed by using a conversion table.

x, y → X, Y (a position (coordinates) on the reference surface 9a)

$Sa_x$, Say, $Sb_x$ and $Sb_y$ → $Sa_x'$, $Sa_y'$ $Sb_x'$ and Sby' (slopes on the reference surface 9a)

Then, the shape analysis apparatus 6' performs the same process with use of differences in the slope $Sa_x'$-$Sb_x'$ and $Sa_y'$-$Sb_y'$ and the position X, Y by replacing the wavefront in the wavefront analysis method described in Embodiment 1 with a shape. This process enables calculating a shape difference between the reference surface 9a and the measurement object surface 10a. Consequently, the shape of the measurement object surface 10a can be acquired by adding the shape difference to the shape of the reference surface 9a.

[Embodiment 4]

FIG. 10 illustrates a configuration of a lens shaping apparatus 200 as a fourth embodiment (Embodiment 4) of the present invention that shapes a lens by using the shape data acquired by the shape analysis apparatus 6' described in Embodiment 3. Instead of the shape analysis apparatus 6', the wavefront measurement apparatus 6 described in Embodiment 2 may be used.

In FIG. 10, reference numeral 20 denotes a material (raw material) of the lens, and reference numeral 201 denotes a shaper that performs shaping such as cutting or grinding on the material to manufacture a measurement object lens 10 as an optical element.

A shape of a measurement object surface 10a formed on a body of the measurement object lens 10 subjected to the shaping by the shaper 201 is measured by the shape analysis apparatus 6' as a measurer. Thereafter, in order to finish the measurement object surface 10a into a target shape, a shape measurement apparatus 100 calculates a shape correction amount for the measurement object surface 10a depending on a difference between measurement data and target data of the shape of the measurement object surface 10a and outputs the shape correction amount to the shaper 201. In response to this output, the shaper 201 performs corrective shaping on the measurement object surface 10a, thereby finishing the measurement object lens 10 having the measurement object surface 10a with the target shape.

Alternatively, the shaper 201 may manufacture an optical apparatus (e.g., a lens apparatus, an image capturing apparatus and an exposure apparatus) including an optical system by using the slope data processing method described in Embodiment 1. That is, the shaper 201 may acquire slope data by measuring a slope of a measurement object light emitted from the light source and transmitted through or reflected by the optical system and acquire, by using the acquired slope data, data of the optical system by the slope data processing method described in Embodiment 1. Thereafter, the shaper 201 may manufacture an optical apparatus by shaping the optical system depending on the acquired data of the optical system.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The method acquires slope data by measurement of slopes of an analysis object at multiple measurement points. The method calculates, by using the slope data at mutually adjacent measurement points, differences $D_x$ and Dy of the analysis object between at the mutually adjacent measurement points (S101), sets multiple start positions at each of which a calculation of the data of the analysis object is started (S102), adds together the differences $D_x$ and Dy on a path from one of the start positions to a position at which the data is acquired (S103), repeats the above additions (S104), calculates x and y average addition results of the differences $D_x$ and Dy from all the start positions (S105), and produces the data by subtracting, from the x and y average addition results, a piston that is an average of the x and y average addition results (S106).

**Claims**

1. A slope data processing method of acquiring data of an analysis object that is a wavefront of light or a shape of an object, by using slope data acquired by measurement of a slope of the analysis object at each of multiple measurement points mutually separate in an x direction and in a y direction, the method **characterized by** comprising:

   a first step (S101) of calculating, by using the slope data at two or more mutually adjacent measurement points among the multiple measurement points, a difference $D_x$ of the analysis object in the x direction and a difference $D_y$ of the analysis object in the y direction between at the mutually adjacent measurement points;
   a second step (S102) of setting, from the multiple measurement points, multiple start positions at each of which a calculation of the data of the analysis object is started;
   a third step (S103) of adding together the differences $D_x$ and adding together the differences $D_y$, the differences $D_x$ and Dy being present on a path from one start position among the multiple start positions to a position at which the data of the analysis object is acquired;
   a fourth step (S104) of repeating the third step for each of the start positions other than the one start position;
   a fifth step (S105) of calculating an x average addition result and a y average addition result that respectively are averages of multiple addition results acquired at the third and fourth steps by adding together the differences $D_x$ and adding together the differences $D_y$ from all the start positions; and
   a sixth step (S106) of producing the data of the analysis object by subtracting, from the x and y average addition results, a piston that is an average of the x and y average addition results.

2. The slope data processing method according to claim 1, wherein, at the first step (S101, T1-T5), the method (a) performs fitting of an (N-1)-th order polynomial with respect to x or y by using the slope data at N measurement points that are mutually adjacent in the x or y direction and whose number N is four or more and (b) calculates a difference of values of integration of the polynomial between at the mutually adjacent measurement points to acquire the differences $D_x$ and $D_y$.

3. The slope data processing method according to claim 1, wherein the first step comprises:

a step of (a) performing fitting of a first polynomial of x or y that is a (N-1)-th order polynomial by using the slope data at the N measurement points that are mutually adjacent in the x or y direction and whose number N is three or more and (b) calculating a difference of values of integration of the first polynomial between at the mutually adjacent measurement points to acquire differences $D_{x1}$ and $D_{y1}$ each being a first difference of the analysis object;

a step of (a) performing fitting of a second polynomial of x or y that is an N-th order polynomial by using the slope data at (N+1) measurement points that are mutually adjacent in the x or y direction and (b) calculating a difference of values of integration of the second polynomial between at the mutually adjacent measurement points to acquire differences $D_{x2}$ and $D_{y2}$ each being a second difference of the analysis object; and

a step of defining an average value of the differences $D_x1$ and $D_{x2}$ as the difference $D_x$ and defining an average value of the differences $D_{y1}$ and $D_{y2}$ as the difference Dy.

4. The slope data processing method according to any one of claims 1 to 3, wherein the method sets the number N depending on a change amount of the slope data.

5. The slope data processing method according to any one of claims 1 to 4, wherein, at the second step, the method sets the multiple start positions such that a density of the multiple start positions is uniform in an area where the measurement points each having the slope data are present.

6. The slope data processing method according to any one of claims 1 to 4, wherein, at the second step, the method sets the multiple start positions such that a density of the multiple start positions in an area where the measurement points each having the slope data are present is higher on a side closer to a boundary of the area than that on a side farther from the boundary.

7. The slope data processing method according to any one of claims 1 to 6, wherein, at the third step, the method respectively divides addition results of the differences $D_x$ and the differences Dy both present on all shortest paths from the start position to the position at which the analysis object is acquired, by number of the shortest paths.

8. The slope data processing method according to any one of claims 1 to 6,
   wherein the third step comprises:

a step (U1) of sequentially adding the differences $D_x$ in the x direction and sequentially adding the differences Dy in the y direction from the start positions to produce x sequential addition data and y sequential addition data at each of addition positions;

a step (U2) of calculating number of all shortest paths from the start position to the position at which the analysis object is acquired; and

a step (U3) of (a) adding the difference $D_x$ to the x sequential addition data at one of the two addition positions which is adjacent in the x direction to the position at which the analysis object is acquired and adding the difference Dy to the y sequential addition data at another one of the two addition positions which is adjacent in the y direction to the position at which the analysis object is acquired, (b) weighting two addition data obtained by these additions by the number of the shortest paths and (c) adding together the two weighted addition data.

9. A slope data processing apparatus (6) configured to acquire data of an analysis object that is a wavefront of light or a shape of an object, by using slope data acquired by measurement of a slope of the analysis object at each of multiple measurement points mutually separate in an x direction and in a y direction, the slope data processing apparatus **characterized by** comprising:

a difference calculator (S101) configured to calculate, by using the slope data at two or more mutually adjacent measurement points among the multiple measurement points, a difference $D_x$ of the analysis object in the x direction and a difference Dy of the analysis object in the y direction between at the mutually adjacent measurement points;

a start position setter (S102) configured to set, from the multiple measurement points, multiple start positions at each of which a calculation of the data of the analysis object is started;

a difference adder (S103) configured to add together the differences $D_x$ and add together the differences $D_y$, the differences $D_x$ and Dy being present on a path from one start position among the multiple start positions to a position at which the data of the analysis object is acquired;

a repeater (S104) configured to cause the difference adder to repeat the additions of the differences $D_x$ and the differences Dy from each of the start positions other than the one start position;

an average calculator (S105) configured to calculate an x average addition result and a y average addition result that respectively are averages of multiple addition results acquired by the difference adder and the repeater by adding together the differences $D_x$ and adding together the differences Dy from all the start positions; and

a data producer (S106) configured to produce the data of the analysis object by subtracting, from the x and y average addition results, a piston that is an average of the x and y average addition results.

**10.** A measurement apparatus comprising:

a light source (1) configured to emit an illumination light projected onto a measurement object;

a slope acquirer (5) configured to measure a slope of a wavefront of a measurement object light transmitted through or reflected by the measurement object out of the illumination light to acquire slope data; and

the slope data processing apparatus (6) according to claim 9.

**11.** A shaping apparatus (200) comprising:

the measurement apparatus (100) according to claim 10; and

a shaper (201) configured to shape a measurement object by using the data of the analysis object acquired by the measurement apparatus.

**12.** A manufacturing method of manufacturing an optical element (10), the manufacturing method **characterized by** comprising:

a step of measuring a slope of a wavefront of a measurement object light emitted from a light source and transmitted through or reflected by the optical element to acquire slope data;

a step of acquiring data of the optical element by the slope data processing method according to any one of claims 1 to 8; and

a step of shaping the optical element on a basis of the acquired data of the optical element.

**13.** A manufacturing method of manufacturing an optical apparatus including an optical system, the manufacturing method **characterized by** comprising:

a step of measuring a slope of a wavefront of a measurement object light emitted from a light source and transmitted through or reflected by the optical system to acquire slope data;

a step of acquiring data of the optical system by the slope data processing method according to any one of claims 1 to 8; and

a step of shaping the optical system on a basis of the acquired data of the optical system.

**14.** A computer program configured to cause a computer to execute a process of acquiring data of an analysis object that is a wavefront of light or a shape of an object, by using slope data acquired by measurement of a slope of the analysis object at each of multiple measurement points mutually separate in an x direction and in a y direction, the process **characterized by** comprising:

a first step (S101) of calculating, by using the slope data at two or more mutually adjacent measurement points among the multiple measurement points, a difference $D_x$ of the analysis object in the x direction and a difference Dy of the analysis object in the y direction between at the mutually adjacent measurement points;

a second step (s102) of setting, from the multiple measurement points, multiple start positions at each of which a calculation of the data of the analysis object is started;

a third step (S103) of adding together the differences $D_x$ and adding together the differences $D_y$, the differences $D_x$ and Dy being present on a path from one start position among the multiple start positions to a position at which the data of the analysis object is acquired;

a fourth step (S104) of repeating the third step for each of the start positions other than the one start position;

a fifth step (S105) of calculating an x average addition result and a y average addition result that respectively are averages of multiple addition results acquired at the third and fourth steps by adding together the differences $D_x$ and adding together the differences Dy from all the start positions; and

a sixth step (S106) of producing the data of the analysis object by subtracting, from the x and y average addition results, a piston that is an average of the x and y average addition results.

EFFECTIVE DATA AREA

INEFFECTIVE DATA AREA

x

y

# FIG. 1

START

| CALCULATE DIFFERENCES Dx AND Dy OF WAVEFRONT BETWEEN AT TWO MUTUALLY ADJACENT GRID POINTS | S101 |

| SET DISTRIBUTION OF START POSITIONS AT EACH OF WHICH WAVEFRONT IS CALCULATED | S102 |

| ADD TOGETHER DIFFERENCES Dx AND Dy OF WAVEFRONT ON PATH FROM START POSITION TO WAVEFRONT CALCULATION POSITION | S103 |

| REPEAT STEP S103 SAME NUMBER AS THAT OF START POSITIONS | S104 |

| CALCULATE X AND Y AVERAGE INTEGRATION VALUES OF INTEGRATION VALUES ACQUIRED AT STEPS S103 AND S104 | S105 |

| SUBTRACT PISTON THAT IS AVERAGE OF AVERAGE INTEGRATION VALUES | S106 |

END

# FIG. 2

START

| SET THRESHOLD OF DIFFERENTIAL VALUE OF SLOPE | T1 |

| CALCULATE DIFFERENTIAL VALUE OF SLOPE | T2 |

| EXTRACT DATA SHOWING SLOPE HAVING DIFFERENTIAL VALUE LARGER THAN THRESHOLD | T3 |

| SET NUMBER N OF SLOPE DATA TO BE USED TO CALCULATE DIFFERENCE Dx (AND Dy) OF WAVEFRONT | T4 |

| CALCULATE DIFFERENCE Dx (AND Dy) OF WAVEFRONT BY USING SLOPE DATA EXTRACTED AT STEP T3 | T5 |

END

FIG. 3

FIG. 4A

FIG. 4B

WAVEFRONT
CALCULATION
POSITION $(t_1,t_2)$

PATH 2

START POSITION
$(s_1,s_2)$

PATH 1

## FIG. 5

WAVEFRONT
CALCULATION
POSITION $(t_1,t_2)$

START POSITION
$(s_1,s_2)$

## FIG. 6

START

| SEQUENTIALLY ADD TOGETHER DIFFERENCES Dx AND DIFFERENCES Dy OF WAVEFRONT IN HORIZONTAL AND VERTICAL DIRECTIONS FROM START POSITION | U1 |

| CALCULATE TOTAL SHORTEST PATH NUMBER | U2 |

| CALCULATE INTEGRATION VALUE W(i,j) BY USING TOTAL SHORTEST PATH NUMBER, TWO MUTUALLY ADJACENT INTEGRATION VALUES MUTUALLY ADJACENT IN HORIZONTAL AND VERTICAL DIRECTIONS AND DIFFERENCES Dx AND Dy | U3 |

| PERFORM STEP U3 ON ALL EFFECTIVE DATA | U4 |

END

FIG. 7

FIG. 8

FIG. 9

FIG. 10

Europäisches
Patentamt

European
Patent Office

Office européen
des brevets

# EUROPEAN SEARCH REPORT

**Application Number**

EP 15 18 9675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SOUTHWELL H W: "WAVE-FRONT ESTIMATION FROM WAVE-FRONT SLOPE MEASUREMENTS", JOURNAL OF THE OPTICAL SOCIETY OF AMERICA, AMERICAN INSTITUTE OF PHYSICS, NEW YORK; US, vol. 70, no. 8, 1 August 1980 (1980-08-01), pages 998-1006, XP002051449, ISSN: 0093-5433, DOI: 10.1364/JOSA.70.000998 * page 998 - page 1006 * ----- | 1-14 | INV. G01B21/04 G01B11/24 |
| X,D | JP 2007 033263 A (UNIV NAGASAKI) 8 February 2007 (2007-02-08) * paragraph [0041] * ----- | 1-14 | |

TECHNICAL FIELDS
SEARCHED       (IPC)

G01B

The present search report has been drawn up for all claims

| Place of search | Date of completion of the search | Examiner |
|---|---|---|
| Munich | 18 February 2016 | Malcoci, Andrei |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 18 9675

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2016

| Patent document cited in search report | Publication date | Patent family member(s) | Publication date |
|---|---|---|---|
| JP 2007033263 A | 08-02-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007033263 A

**Non-patent literature cited in the description**

- **W.H.SOUTHWELL.** Wave-front estimation from wave-front slope measurement. *J.Opt.Soc.Am.,* 1980, vol. 70, 998-1006

- **DANIEL MALACARA.** *Optical Experiment and Measurement Method I, Optical Shop Testing,* 356